# EUROPEAN PATENT APPLICATION

(11) **EP 3 744 174 A1**
(43) Date of publication of application: **02.12.2020**
(21) Application number: 19176680.7
(22) Date of filing: 27.05.2019
(51) Int. Cl.: A01N 43/713, A01P 3/00

(54) **USE OF METYLTETRAPROL AND MIXTURES OF METYLTETRAPROL FOR COMBATING PHYTOPATHOGENIC FUNGI ON COTTON**

(71) Applicant: BASF SE, 67056 Ludwigshafen am Rhein (DE)
(72) Inventor: MONTAG, Jurith Dr., 67117 Limburgerhof, (DE); GEWEHR, Markus Dr., 67117 Limburgerhof (DE)
(74) Representative: BASF IP Association

(57) **Abstract**

Use of metyltetraprol or of fungicidal mixtures comprising, as active components,
1) metyltetraprol as compound I
2) at least one fungicide, insecticide, herbicide or plant growth regulator as compound II,
for combating Corynespora cassiicola, Ramularia areola, Cotton blue disease; Cotton leaf curl disease; Fusarium oxysporum f. sp. Vasinfectum; Phymatotrichopsis omnivore or Verticillium dahliae on cotton

## Description

The present invention relates to the use of metyltetraprol or of fungicidal mixtures comprising as active components, metyltetraprol as compound I and at least one fungicide, insecticide, herbicide or plant growth regulator as compound II for combating phytopathogenic fungi on cotton, in particular for combating Corynespora cassiicola, Ramularia areola, Cotton blue disease; Cotton leaf curl disease; Fusarium oxysporum f. sp. Vasinfectum; Phymatotrichopsis omnivore and Verticillium dahliae.

Moreover, the invention relates to a method for controlling phytopathogenic pests, wherein the pest, their habitat, breeding grounds, their locus or the plants to be protected against pest attack, the soil or plant propagation material are treated with an effective amount of such mixture.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring. In a particular preferred embodiment, the term propagation material denotes seeds.

Compound I and analogues as well as its pesticidal activity and methods for producing it are known e.g. from WO 2013/162072. Compound II as well as its pesticidal activity and methods for producing them are generally known (cf.: http://www.alanwood.net/pesticides/); these substances are commercially available.

One typical problem arising in the field of pest control lies in the need to reduce the dosage rates of the active ingredient in order to reduce or avoid unfavorable environmental or toxicological effects whilst still allowing effective pest control.

In regard to the present invention the term pests embrace harmful fungi and animal pests.

Another problem encountered concerns the need to have available pest control agents which are effective against a broad spectrum of harmful fungi and harmful animal pests.

There also exists the need for pest control agents that combine knock-down activity with prolonged control, that is, fast action with long lasting action.

Another difficulty in relation to the use of pesticides is that the repeated and exclusive application of an individual pesticidal compound leads in many cases to a rapid selection of pests, that means animal pests, and harmful fungi, which have developed natural or adapted resistance against the active compound in question. Therefore, there is a need for pest control agents that help prevent or overcome resistance.

Another problem underlying the present invention is the desire for compositions that improve plants, a process which is commonly and hereinafter referred to as "plant health".

The term plant health comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), tillering increase, increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

It was therefore an object of the present invention to provide pesticidal mixtures which solve the problems of reducing the dosage rate and / or enhancing the spectrum of activity and / or combining knock-down activity with prolonged control and / or to resistance management and/or promoting the health of plants.

We have found that this object is in part or in whole achieved by the use of metyltetraprol or mixtures of metyltetraprol with at least one fungicide, insecticide or plant growth regulator on cotton.

It was found that of metyltetraprol or mixtures of metyltetraprol with at least one fungicide, insecticide or plant growth regulator are especially effective for combating the following pathogens on cotton:
Corynespora cassiicola, Ramularia areola, Colletotrichum (teleomorph: Glomerella) spp. (anthracnose), e. g. C. gossypii; Cotton blue disease; Cotton leaf curl disease; Fusarium oxysporum f. sp. Vasinfectum; Glomerella gossypii; Macrophomina phaseolina (syn. phaseoli) (root and stem rot); Phymatotrichopsis omnivore; Pythium spp. (damping-off); Rhizoctonia spp.; Verticillium dahliae.

Preferably, metyltetraprol or mixtures of metyltetraprol with at least one fungicide, insecticide or plant growth regulator are used for combating Corynespora cassiicola, Ramularia areola, Cotton blue disease; Cotton leaf curl disease; Fusarium oxysporum f. sp. Vasinfectum; Phymatotrichopsis omnivore; Verticillium dahliae on cotton.

Especially preferably, metyltetraprol or mixtures of metyltetraprol with at least one fungicide, insecticide or plant growth regulator are used for combating Corynespora cassiicola or Ramularia areola, in each case on cotton.

In one embodiment, compound II is selected from the following fungicides, insecticides or plant growth regulators:
Fungicides: Acibenzolar, Azoxystrobin, Benzovindiflupyr, Boscalid, Carbendazim, Difenoconazole, Dimoxystrobin, Fentin acetate, Fluazinam, Flutriafol, Fluxapyroxad, Mefentrifluconazole, Metominostrobin, Myclobutanil, Penflufen, Picoxystrobin, Pydiflumetofen, Pyraclostrobin, Tetraconazole, Thiophanate-methyl, Triadimefon, Trifloxystrobin, Prothioconazole, Chlorthalonil, Mancozeb;
Insecticides: Abamectin, Acephate, Acetamiprid, Afidopyropen, Aldicarb, Alpha-cypermethrin, Bifenthrin, Broflanilid, Buprofezin, Carbosulfan, Chlorantraniliprole, Chlorfenapyr, Chlorpyrifos, Cyantraniliprole, Cyclaniliprole, Cyfluthrin, Cypermethrin, Deltametrin, Diafenthiuron, Dicrotophos, Dinotefuran, Emamectin, Fipronil, Flonicamid, Flubendiamide, Flupyradifurone, Imidacloprid, Indoxacarb, Lambda-cyhalotrhin, Lufenuron, Malathion, Metaflumizon, Methomyl, Novaluron, Phoxim, Profenophos, Pyriproxyfen, Quinalphos, Spinetoram, Spinosad, Spiromesifen, Spirotetramat, Sulfoxaflor, Teflubenzuron, Thiamethoxam, Thiodicarb, Tioxazafen, Triazophos Plant growth regulators: Chlormequat, Cyclanilide, Ethephon, Mepiquat, Prohexadione-calcium, Thidiazuron, Tributyl phosphorotrithioate.

In one embodiment, compound II is selected from the following fungicides, insecticides or plant growth regulators:
Fungicides: Azoxystrobin, Benzovindiflupyr, Boscalid, Carbendazim, Difenoconazole, Fluxapyroxad, Mefentrifluconazole, Pydiflumetofen, Pyraclostrobin, Tetraconazole, Thiophanate-methyl, Triadimefon, Trifloxystrobin, Prothioconazole, Chlorthalonil, Mancozeb;
Insecticides: Abamectin, Acephate, Acetamiprid, Afidopyropen, , Alpha-cypermethrin, Broflanilid, Chlorantraniliprole, Chlorfenapyr, Chlorpyrifos, Cyantraniliprole, Cyclaniliprole, Deltametrin, Diafenthiuron, Dicrotophos, Dinotefuran, Fipronil, Flubendiamide, Flupyradifurone, Imidacloprid, Lambda-cyhalotrhin, Novaluron, Profenophos, Pyriproxyfen, Quinalphos, Spinosad, Sulfoxaflor, Teflubenzuron, Thiamethoxam;
Plant growth regulators: Chlormequat, Ethephon, Mepiquat, Prohexadione-calcium, Thidiazuron, Tributyl phosphorotrithioate.

In one preferred embodiment, compound II is selected from the following fungicides, insecticides or plant growth regulators:
Fungicides: Azoxystrobin, Benzovindiflupyr, Boscalid, Difenoconazole, Fluxapyroxad, Mefentrifluconazole, Pydiflumetofen, Pyraclostrobin, Tetraconazole, Thiophanate-methyl, Prothioconazole, Chlorthalonil, Mancozeb;
Insecticides: Abamectin, Acephate, Acetamiprid, Afidopyropen, Broflanilid, Chlorantraniliprole, Chlorfenapyr, Chlorpyrifos, Cyantraniliprole, Diafenthiuron, Dinotefuran, Fipronil, Imidacloprid, Pyriproxyfen, Spinosad, Sulfoxaflor, Teflubenzuron, Thiamethoxam;
Plant growth regulators: Chlormequat, Ethephon, Mepiquat, Prohexadione-calcium, Thidiazuron.

In one preferred embodiment, compound II is selected from the following fungicides: Azoxystrobin, Benzovindiflupyr, Boscalid, Difenoconazole, Fluxapyroxad, Mefentrifluconazole, Pydiflumetofen, Pyraclostrobin, Tetraconazole, Thiophanate-methyl, Prothioconazole, Chlorthalonil, Mancozeb.

Especially preferred is the use metyltetraprol or mixtures of metyltetraprol with at least one fungicide, insecticide or plant growth regulator for the combinations 1 to 88 as disclosed in the following table:

| # | Compound I | Compound II | Crop | Pathogen |
|---|---|---|---|---|
| 1 | Metyltetraprole | Acibenzolar | cotton | Corynespora cassiicola |
| 2 | Metyltetraprole | Azoxystrobin | cotton | Corynespora cassiicola |
| 3 | Metyltetraprole | Benzovindiflupyr | cotton | Corynespora cassiicola |
| 4 | Metyltetraprole | Boscalid | cotton | Corynespora cassiicola |
| 5 | Metyltetraprole | Carbendazim | cotton | Corynespora cassiicola |
| 6 | Metyltetraprole | Difenoconazole | cotton | Corynespora cassiicola |
| 7 | Metyltetraprole | Dimoxystrobin | cotton | Corynespora cassiicola |
| 8 | Metyltetraprole | Fentin acetate | cotton | Corynespora cassiicola |
| 9 | Metyltetraprole | Fluazinam | cotton | Corynespora cassiicola |
| 10 | Metyltetraprole | Flutriafol | cotton | Corynespora cassiicola |
| 11 | Metyltetraprole | Fluxapyroxad | cotton | Corynespora cassiicola |
| 12 | Metyltetraprole | Mefentrifluconazole | cotton | Corynespora cassiicola |
| 13 | Metyltetraprole | Metominostrobin | cotton | Corynespora cassiicola |
| 14 | Metyltetraprole | Myclobutanil | cotton | Corynespora cassiicola |
| 15 | Metyltetraprole | Penflufen | cotton | Corynespora cassiicola |
| 16 | Metyltetraprole | Picoxystrobin | cotton | Corynespora cassiicola |
| 17 | Metyltetraprole | Pydiflumetofen | cotton | Corynespora cassiicola |
| 18 | Metyltetraprole | Pyraclostrobin | cotton | Corynespora cassiicola |
| 19 | Metyltetraprole | Tetraconazole | cotton | Corynespora cassiicola |
| 20 | Metyltetraprole | Thiophanate-methyl | cotton | Corynespora cassiicola |
| 21 | Metyltetraprole | Triadimefon | cotton | Corynespora cassiicola |
| 22 | Metyltetraprole | Trifloxystrobin | cotton | Corynespora cassiicola |
| 23 | Metyltetraprole | Prothioconazole | cotton | Corynespora cassiicola |
| 24 | Metyltetraprole | Chlorthalonil | cotton | Corynespora cassiicola |
| 25 | Metyltetraprole | Mancozeb | cotton | Corynespora cassiicola |
| 26 | Metyltetraprole | Acibenzolar | cotton | Ramularia areola |
| 27 | Metyltetraprole | Azoxystrobin | cotton | Ramularia areola |
| 28 | Metyltetraprole | Benzovindiflupyr | cotton | Ramularia areola |
| 29 | Metyltetraprole | Boscalid | cotton | Ramularia areola |
| 30 | Metyltetraprole | Carbendazim | cotton | Ramularia areola |
| 31 | Metyltetraprole | Difenoconazole | cotton | Ramularia areola |
| 32 | Metyltetraprole | Dimoxystrobin | cotton | Ramularia areola |
| 33 | Metyltetraprole | Fentin acetate | cotton | Ramularia areola |
| 34 | Metyltetraprole | Fluazinam | cotton | Ramularia areola |
| 35 | Metyltetraprole | Flutriafol | cotton | Ramularia areola |
| 36 | Metyltetraprole | Fluxapyroxad | cotton | Ramularia areola |
| 37 | Metyltetraprole | Mefentrifluconazole | cotton | Ramularia areola |
| 38 | Metyltetraprole | Metominostrobin | cotton | Ramularia areola |
| 39 | Metyltetraprole | Myclobutanil | cotton | Ramularia areola |
| 40 | Metyltetraprole | Penflufen | cotton | Ramularia areola |
| 41 | Metyltetraprole | Picoxystrobin | cotton | Ramularia areola |
| 42 | Metyltetraprole | Pydiflumetofen | cotton | Ramularia areola |
| 43 | Metyltetraprole | Pyraclostrobin | cotton | Ramularia areola |
| 44 | Metyltetraprole | Tetraconazole | cotton | Ramularia areola |
| 45 | Metyltetraprole | Thiophanate-methyl | cotton | Ramularia areola |
| 46 | Metyltetraprole | Triadimefon | cotton | Ramularia areola |
| 47 | Metyltetraprole | Trifloxystrobin | cotton | Ramularia areola |
| 48 | Metyltetraprole | Prothioconazole | cotton | Ramularia areola |
| 49 | Metyltetraprole | Chlorthalonil | cotton | Ramularia areola |
| 50 | Metyltetraprole | Mancozeb | cotton | Ramularia areola |

Mixtures according to the invention are suitable for combating phytopathogenic fungi on cotton such fungi containing a mutation in the mitochondrial cytochrome b gene conferring resistance to Qo inhibitors, wherein the mutation is G143A.

Resistant fungi on cotton in the course of the use of the present invention, wherein the mutation is G143A are Corynespora cassiicola, Ramularia areola, Colletotrichum (teleomorph: Glomerella) spp. (anthracnose), e. g. C. gossypii; Cotton blue disease; Cotton leaf curl disease; Fusarium oxysporum f. sp. Vasinfectum; Glomerella gossypii; Macrophomina phaseolina (syn. phaseoli) (root and stem rot); Phymatotrichopsis omnivore; Pythium spp. (damping-off); Rhizoctonia spp.; Verticillium dahliae.

Preferably, metyltetraprol or mixtures of metyltetraprol with at least one fungicide, insecticide or plant growth regulator are used for combating the following phytopathogenic fungi on cotton such fungi containing a mutation in the mitochondrial cytochrome b gene conferring resistance to Qo inhibitors, wherein the mutation is G143A: Corynespora cassiicola, Ramularia areola, Cotton blue disease; Cotton leaf curl disease; Fusarium oxysporum f. sp. Vasinfectum; Phymatotrichopsis omnivore; Verticillium dahliae, in each case on cotton.

Especially preferably, metyltetraprol or mixtures of metyltetraprol with at least one fungicide, insecticide or plant growth regulator are used on cotton for combating Corynespora cassiicola or Ramularia areola containing a mutation in the mitochondrial cytochrome b gene conferring resistance to Qo inhibitors, wherein the mutation is G143A .

Especially, it has been found that the mixtures as defined in the outset show markedly enhanced action against pests compared to the control rates that are possible with the individual compounds and/or is suitable for improving the health of plants when applied to plants, parts of plants, seeds, or at their locus of growth.

It has been found that the action of the inventive mixtures comprising compound I and compound II goes far beyond the fungicidal and/or plant health improving action of the active compounds present in the mixture alone (synergistic action).

Moreover, we have found that simultaneous, that is joint or separate, application of the compound I and the compound II or successive application of the compound I and the compound II allows enhanced control of harmful fungi, compared to the control rates that are possible with the individual compounds (synergistic mixtures).

Moreover, we have found that simultaneous, that is joint or separate, application of the compound I and the compound II or successive application of the compound I and the compound II provides enhanced plant health effects compared to the plant health effects that are possible with the individual compounds.

The ratio by weight of compound I and compound II in binary mixtures is from 10000:1 to 1:10000, from 500:1 to 1:500, preferably from 100:1 to 1:100 more preferably from 50:1 to 1:50, most preferably from 20:1 to 1:20, including also ratios from 10:1 to 1:10, 1:5 to 5:1, or 1:1.

All above-referred mixtures are herein below referred to as "inventive mixtures".

The inventive mixtures can further contain one or more insecticides, fungicides, herbicides.

The inventive mixtures can be used as customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grube-mann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzyl alcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol. 1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the inventive mixtures on the target. Examples are surfactants, mineral or vegetable oils, and other auxiliaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), inorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidones, polyvinylacetates, polyvinyl alcohols, polyacrylates, biological or synthetic waxes, and cellulose ethers.

Examples for composition types and their preparation are:
i) Water-soluble concentrates (SL, LS)
   10-60 wt% of an inventive mixture and 5-15 wt% wetting agent (e.g. alcohol alkoxylates) are dissolved in water and/or in a water-soluble solvent (e.g. alcohols) ad 100 wt%. The active substance dissolves upon dilution with water.
ii) Dispersible concentrates (DC)
   5-25 wt% of an inventive mixture and 1-10 wt% dispersant (e. g. polyvinylpyrrolidone) are dissolved in organic solvent (e.g. cyclohexanone) ad 100 wt%. Dilution with water gives a dispersion.
iii) Emulsifiable concentrates (EC)
   15-70 wt% of an inventive mixture and 5-10 wt% emulsifiers (e.g. calcium dodecylbenzene sulfonate and castor oil ethoxylate) are dissolved in water-insoluble organic solvent (e.g. aromatic hydrocarbon) ad 100 wt%. Dilution with water gives an emulsion.
iv) Emulsions (EW, EO, ES)
   5-40 wt% of an inventive mixture and 1-10 wt% emulsifiers (e.g. calcium dodecylbenzene sulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.
v) Suspensions (SC, OD, FS)
   In an agitated ball mill, 20-60 wt% of an inventive mixture are comminuted with addition of 2-10 wt% dispersants and wetting agents (e.g. sodium lignosulfonate and alcohol ethoxylate), 0.1-2 wt% thickener (e.g. xanthan gum) and water ad 100 wt% to give a fine active substance suspension. Dilution with water gives a stable suspension of the active substance. For FS type composition up to 40 wt% binder (e.g. polyvinyl alcohol) is added.
vi) Water-dispersible granules and water-soluble granules (WG, SG)
   50-80 wt% of an inventive mixture are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.
vii) Water-dispersible powders and water-soluble powders (WP, SP, WS)
   50-80 wt% of an inventive mixture are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.
viii) Gel (GW, GF)
   In an agitated ball mill, 5-25 wt% of an inventive mixture are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.
ix) Microemulsion (ME)
   5-20 wt% of an inventive mixture are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100 %. This mixture is stirred for 1 h to produce spontaneously a thermodynamically stable microemulsion.
x) Microcapsules (CS)
   An oil phase comprising 5-50 wt% of an inventive mixture, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of an inventive mixture according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS composition.
xi) Dustable powders (DP, DS)
   1-10 wt% of an inventive mixture are ground finely and mixed intimately with solid carrier (e.g. finely divided kaolin) ad 100 wt%.
xii) Granules (GR, FG)
   0.5-30 wt% of an inventive mixture is ground finely and associated with solid carrier (e.g. silicate) ad 100 wt%. Granulation is achieved by extrusion, spray-drying or fluidized bed.
xiii) Ultra-low volume liquids (UL)
   1-50 wt% of an inventive mixture are dissolved in organic solvent (e.g. aromatic hydrocarbon) ad 100 wt%.

The compositions types i) to xiii) may optionally comprise further auxiliaries, such as 0.1-1 wt% bactericides, 5-15 wt% anti-freezing agents, 0.1-1 wt% anti-foaming agents, and 0.1-1 wt% colorants.

The resulting agrochemical compositions generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum).

Solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying the inventive mixtures and compositions thereof, respectively, on to plant propagation material, especially seeds include dressing, coating, pelleting, dusting, soaking and in-furrow application methods of the propagation material. Preferably, the inventive mixtures or the compositions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.01 to 1.0 kg per ha, and in particular from 0.05 to 0.75 kg per ha.

In treatment of plant propagation materials such as seeds, e. g. by dusting, coating or drenching seed, amounts of active substance of from 0.01-10kg, preferably from 0.1-1000 g, more preferably from 1-100 g per 100 kilogram of plant propagation material (preferably seeds) are generally required.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of a binary mixture may be mixed by the user himself in a spray tank or any other kind of vessel used for applications (e. g. seed treater drums, seed pelleting machinery, knapsack sprayer) and further auxiliaries may be added, if appropriate.

Consequently, one embodiment of the invention is a kit for preparing a usable pesticidal composition, the kit comprising a) a composition comprising component 1) as defined herein and at least one auxiliary; and b) a composition comprising component 2) as defined herein and at least one auxiliary; and optionally c) a composition comprising at least one auxiliary and optionally a further active component 3) as defined herein.

As said above, the present invention comprises an use of the mixture for controlling phytopathogenic harmful fungi and to a method for controlling phytopathogenic pests, wherein the pest, their habitat, breeding grounds, their locus or the plants to be protected against pest attack, the soil or plant propagation material are treated with an effective amount of the mixture.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as desired pesticidal effect and duration, weather, target species, locus, mode of application, and the like.

As said above, the present invention comprises a method for improving the health of plants, wherein the plant, the locus where the plant is growing or is expected to grow or plant propagation material, from which the plant grows, is treated with an plant health effective amount of an inventive mixture.

The term "plant effective amount" denotes an amount of the inventive mixtures, which is sufficient for achieving plant health effects as defined herein below. More exemplary information about amounts, ways of application and suitable ratios to be used is given below. Anyway, the skilled artisan is well aware of the fact that such an amount can vary in a broad range and is dependent on various factors, e.g. the treated cultivated plant or material and the climatic conditions.

When preparing the mixtures, it is preferred to employ the pure active compounds, to which further active compounds against pests, such as insecticides, herbicides, fungicides or else herbicidal or growth-regulating active compounds or fertilizers can be added as further active components according to need.

The inventive mixtures are employed by treating the fungi or the plants, plant propagation materials (preferably seeds), materials or soil to be protected from fungal attack with a pesticidally effective amount of the active compounds. The application can be carried out both before and after the infection of the materials, plants or plant propagation materials (preferably seeds) by the pests.

In the context of the present invention, the term plant refers to an entire plant, a part of the plant or the propagation material of the plant.

Preferably, treatment of plant propagation materials with the inventive mixtures and compositions thereof, respectively, is used for controlling a multitude of fungi on cotton.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties. Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibitors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest Management Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis). Genetic engineering methods have been used to render cotton tolerant to herbicides such as glyphosate and glufosinate, some of which are commercially available under the trade names RoundupReady® (glyphosate-tolerant, Monsanto, U.S.A.), Cultivance® (imidazolinone tolerant, BASF SE, Germany) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus*, particularly from *Bacillus thuringiensis*, such as δ-endotoxins, e. g. CryIA(b), CryIA(c), CryIF, CryIF(a2), CryIIA(b), CriIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdyster-oid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of arthropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); IPC 531 from Monsanto Europe S.A., Belgium (cotton cultivars producing a modified version of the Cry1Ac toxin).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content.

Furthermore, plants are also covered that contain by the use of recombinant DNA techniques a modified amount of substances of content or new substances of content, specifically to improve raw material production.

The separate or joint application of the compounds of the inventive mixtures is carried out by spraying or dusting the seeds, the seedlings, the plants or the soils before or after sowing of the plants or before or after emergence of the plants.

The inventive mixtures and the compositions comprising them can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

Customary application rates in the protection of materials are, for example, from 0.01 g to 1000 g of active compound per m² treated material, desirably from 0.1 g to 50 g per m².

For use in spray compositions, the content of the mixture of the active ingredients is from 0.001 to 80 weight %, preferably from 0.01 to 50 weight % and most preferably from 0.01 to 15 weight %.

## Claims

1. Use of metyltetraprol or of fungicidal mixtures comprising, as active components,
1) metyltetraprol as compound I
2) at least one fungicide, insecticide, herbicide or plant growth regulator as compound II,
for combating Corynespora cassiicola, Ramularia areola, Cotton blue disease; Cotton leaf curl disease; Fusarium oxysporum f. sp. Vasinfectum; Phymatotrichopsis omnivore or Verticillium dahliae on cotton.

2. The use as claimed in any of claims 1 , wherein compound II is selected from Acibenzolar, Azoxystrobin, Benzovindiflupyr, Boscalid, Carbendazim, Difenoconazole, Dimoxystrobin, Fentin acetate, Fluazinam, Flutriafol, Fluxapyroxad, Mefentrifluconazole, Metominostrobin, Myclobutanil, Penflufen, Picoxystrobin, Pydiflumetofen, Pyraclostrobin, Tetraconazole, Thiophanate-methyl, Triadimefon, Trifloxystrobin, Prothioconazole, Chlorthalonil, Mancozeb; Abamectin, Acephate, Acetamiprid, Afidopyropen, Aldicarb, Alpha-cypermethrin, Bifenthrin, Broflanilid, Buprofezin, Carbosulfan, Chlorantraniliprole, Chlorfenapyr, Chlorpyrifos, Cyantraniliprole, Cyclaniliprole, Cyfluthrin, Cypermethrin, Deltametrin, Diafenthiuron, Dicrotophos, Dinotefuran, Emamectin, Fipronil, Flonicamid, Flubendiamide, Flupyradifurone, Imidacloprid, Indoxacarb, Lambda-cyhalotrhin, Lufenuron, Malathion, Metaflumizon, Methomyl, Novaluron, Phoxim, Profenophos, Pyriproxyfen, Quinalphos, Spinetoram, Spinosad, Spiromesifen, Spirotetramat, Sulfoxaflor, Teflubenzuron, Thiamethoxam, Thiodicarb, Tioxazafen, Triazophos; Chlormequat, Cyclanilide, Ethephon, Mepiquat, Prohexadione-calcium, Thidiazuron, Tributyl phosphorotrithioate.

3. The use as claimed in any of claims 1 or 2, wherein compound II is selected from Azoxystrobin, Benzovindiflupyr, Boscalid, Carbendazim, Difenoconazole, Fluxapyroxad, Mefentrifluconazole, Pydiflumetofen, Pyraclostrobin, Tetraconazole, Thiophanate-methyl, Triadimefon, Trifloxystrobin, Prothioconazole, Chlorthalonil, Mancozeb; Abamectin, Acephate, Acetamiprid, Afidopyropen, Alpha-cypermethrin, Broflanilid, Chlorantraniliprole, Chlorfenapyr, Chlorpyrifos, Cyantraniliprole, Cyclaniliprole, Deltametrin, Diafenthiuron, Dicrotophos, Dinotefuran, Fipronil, Flubendiamide, Flupyradifurone, Imidacloprid, Lambda-cyhalotrhin, Novaluron, Profenophos, Pyriproxyfen, Quinalphos, Spinosad, Sulfoxaflor, Teflubenzuron, Thiamethoxam; Chlormequat, Ethephon, Mepiquat, Prohexadione-calcium, Thidiazuron, Tributyl phosphorotrithioate.

4. The use as claimed in any of claims 1 to 3, wherein compound II is selected from Fungicides: Azoxystrobin, Benzovindiflupyr, Boscalid, Difenoconazole, Fluxapyroxad, Mefentrifluconazole, Pydiflumetofen, Pyraclostrobin, Tetraconazole, Thiophanate-methyl, Prothioconazole, Chlorthalonil, Mancozeb; Abamectin, Acephate, Acetamiprid, Afidopyropen, Broflanilid, Chlorantraniliprole, Chlorfenapyr, Chlorpyrifos, Cyantraniliprole, Diafenthiuron, Dinotefuran, Fipronil, Imidacloprid, Pyriproxyfen, Spinosad, Sulfoxaflor, Teflubenzuron, Thiamethoxam; Chlormequat, Ethephon, Mepiquat, Prohexadione-calcium, Thidiazuron.

5. The use as claimed in any of claims 1 to 4, for combating Corynespora cassiicola or Ramularia areola on cotton.

6. The use as claimed in any of claims 1 to 5, wherein ratio by weight of compound I and compound II is from 100:1 to 1:100.

7. The use as defined in any of claims 1 to 6 for controlling phytopathogenic harmful fungi wherein the fungi contains a mutation in the mitochondrial cytochrome b gene conferring resistance to Qo inhibitors, wherein the mutation is G143A.

8. A method for controlling phytopathogenic pests, wherein the pest, their habitat, breeding grounds, their locus or the plants to be protected against pest attack, the soil or plant propagation material are treated with an effective amount of the mixture as defined in any of claims 1 to 6.

9. A method as claimed in claim 8, wherein the mixture as defined in any of claims 1 to 7 is applied in an amount of from 0.01 g to 10 kg per 100 kg of plant propagation materials.

10. A method as claimed in any of claims 8 to 9 wherein the mixture as defined in any of claims 1 to 6 are applied simultaneously, that is jointly or separately, or in succession.
